# EUROPÄISCHE PATENTSCHRIFT

(11) **EP 0 882 082 B1**
(45) Veröffentlichungstag und Bekanntmachung des Hinweises auf die Patenterteilung: **08.11.2000**
(21) Anmeldenummer: 97902348.8
(22) Anmeldetag: 07.02.1997
(51) Int. Cl.: C08G 61/00, C09K 11/06

(54) **TEILKONJUGIERTE POLYMERE MIT SPIROZENTREN UND IHRE VERWENDUNG ALS ELEKTROLUMINESZENZMATERIALIEN**
PARTLY CONJUGATED POLYMERS WITH SPIRO CENTRES AND THEIR USE AS ELECTRO-LUMINESCENT MATERIALS
POLYMERES PARTIELLEMENT CONJUGUES A SPIROCENTRES ET LEUR UTILISATION COMME MATERIAUX ELECTROLUMINESCENTS

(30) Priorität: 22.02.1996 DE 19606511
(43) Veröffentlichungstag der Anmeldung: 09.12.1998
(73) Patentinhaber: Axiva GmbH, 65926 Frankfurt am Main (DE)
(72) Erfinder: KREUDER, Willi, D-55126 Mainz (DE); SPREITZER, Hubert, D-65926 Frankfurt am Main (DE)
(86) Internationale Anmeldenummer: EP9700551
(87) Internationale Veröffentlichungsnummer: WO9731048

(56) Entgegenhaltungen:
- EP-A- 0 707 020

## Beschreibung

Es besteht ein hoher industrieller Bedarf an großflächigen Festkörper-Lichtquellen für eine Reihe von Anwendungen, überwiegend im Bereich von Anzeigeelementen, der Bildschirmtechnologie und der Beleuchtungstechnik. Die an diese Lichtquellen gestellten Anforderungen können zur Zeit von keiner der bestehenden Technologien völlig befriedigend gelöst werden.

Als Alternative zu herkömmlichen Anzeige- und Beleuchtungselementen, wie Glühlampen, Gasentladungslampen und nicht selbstleuchtenden Flüssigkristallanzeigeelementen, sind bereits seit einiger Zeit Elektrolumineszenz(EL)materialien und -vorrichtungen, wie lichtemittierende Dioden (LED), in Gebrauch.

In der DE-A 25 45 784 (entspricht US-A 3,995,299) ist eine Elektrolumineszenzvorrichtung mit einer Strahlungsquelle beschrieben, die aus einer Schicht eines amorphen oder überwiegend amorphen Polymermaterials mit merklicher elektrischer Ladungsbeweglichkeit und niedrigem lonisationspotential, einem starken Elektronendonor, einem starken Elektronenakzeptor und vorzugsweise zumindest einem lumineszierenden Additiv besteht, wobei elektrische Anschlüsse vorgesehen sind, durch die ein elektrischer Strom durch die Dicke der Schicht zur Anregung von Strahlung daraus geleitet werden kann.

Als Polymermaterialien sind konjugierte Polymere, wie Poly(p-phenylenvinylen) (siehe z.B. WO-A 90/13148), wie auch nicht konjugierte Polymere eingesetzt worden (siehe z.B. l. Sokolik et al., J. Appl. Phys. **1993**, 74, 3584), wobei konjugierte Materialien im allgemeinen den Vorteil einer höheren Ladungsträgerbeweglichkeit und damit besserer Effizienzen und niedrigerer Einsatzspannungen haben. Zudem ist bei letzteren Polymeren die thermische Stabilität keinesfalls befriedigend. Auch führt diese Art von Polymeren zu breiten Emissionsbanden, welche mit geringer Farbreinheit identisch sind.

Neben Vorrichtungen auf Basis von Polymeren sind seit längerem auch Elektrolumineszenzvorrichtungen auf Basis von niedermolekularen organischen Verbindungen bekannt. In der EP-A-0 676 461 sind solche Vorrichtungen mit Spiroverbindungen als Elektrolumineszenzmaterialien beschrieben.

Obwohl mit diesen Materialien gute Ergebnisse erzielt wurden, ist das Eigenschaftsprofil solcher Verbindungen noch durchaus verbesserungsfähig.

Da zudem die Entwicklung von Elektrolumineszenzmaterialien, insbesondere auf Grundlage von Polymeren, noch in keiner Weise als abgeschlossen betrachtet werden kann, sind die Hersteller von Beleuchtungs- und Anzeigevorrichtungen an den unterschiedlichsten Elektrolumineszenzmaterialien für solche Vorrichtungen interessiert.

Dies liegt unter anderem auch daran, daß erst das Zusammenwirken der Elektrolumineszenzmaterialien mit den weiteren Bauteilen der Vorrichtungen Rückschlüsse auf die Qualität auch des Elektrolumineszenzmaterials zuläßt.

Aufgabe der vorliegenden Erfindung war es daher, neue Elektrolumineszenzmaterialien bereitzustellen, die bei Verwendung in Beleuchtungs- oder Anzeigevorrichtungen geeignet sind, das Eigenschaftsprofil dieser Vorrichtungen zu verbessern.

Es wurde nun überraschend gefunden, daß sich bestimmte teilkonjugierte Polymere mit Spirozentren in besonderer Weise als Elektrolumineszenzmaterialien eignen und insbesondere eine exzellente Verarbeitbarkeit aufweisen.

Gegenstand der Erfindung ist daher ein teilkonjugiertes Polymer, enthaltend Wiederholeinheiten der Formel (I), 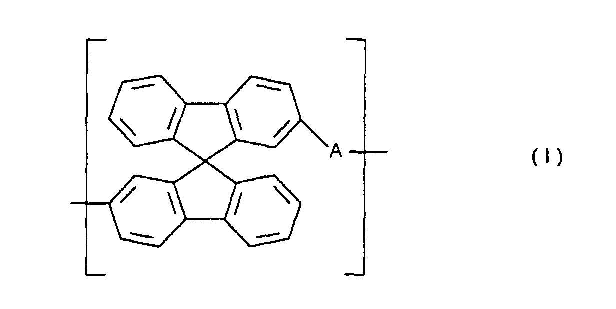 wobei die Symbole folgende Bedeutungen haben:
A ist gleich oder verschieden jeweils null bis acht gleiche oder verschiedene Arylen- und/oder Heteroarylen- und/oder Vinylen- und/oder Acetylengruppen, die, wie auch das Spirobifluorengerüst, gegebenenfalls substituiert sein können.

Die erfindungsgemäßen Polymere enthalten vorzugsweise 2 bis 1000, besonders bevorzugt 2 bis 100, insbesondere 2 bis 40, Wiederholeinheiten der Formel (I).

Vorzugsweise bestehen die erfindungsgemäßen Polymere aus Wiederholeinheiten der Formel (I).

Bevorzugt sind Homopolymere, ebenso bevorzugt aber auch Copolymere, das heißt, solche Polymere, in denen die Gruppe A in einzelnen Wiederholeinheiten verschiedene Bedeutungen hat oder das Spirobifluorengerüst verschieden substituiert ist. Vorzugsweise enthalten solche Copolymere 2 bis 5 verschiedene Monomere, besonders bevorzugt 2 bis 3. Solche Copolymere, die neben Struktureinheiten der Formel (I) weitere Struktureinheiten aufweisen, enthalten vorzugsweise mindestens 50 Gew.-% an Strukturelementen der Formel (I).

Die Arylen- oder Heteroaryleneinheiten sind im allgemeinen aromatische Systeme mit 2 bis 20 C-Atome.

Bevorzugt als Substituenten sind eine geradkettige, cyclische oder verzweigte Alkyl-, Alkoxy- oder Estergruppe mit 1 bis 22 C-Atomen, Aryl- und/oder Aryloxygruppen, mit vorzugsweise 2 bis 20 C-Atomen, vorzugsweise Phenyl- und/oder Phenyloxygruppen, wobei der Aromat mit C₁-C₂₂-Alkyl, C₁-C₂₂-Alkoxy, Br, Cl, F, CN, CO₂R, SO₃ R und/oder P(O)(OR)₂ substituiert sein kann, Br, Cl, F, CN CO₂R, SO₃R, P(O)(OR)₂ und CF₃. R ist dabei H oder eine geradkettige oder verzweigte Alkylgruppe mit 1 bis 22 C-Atomen oder ein einfach geladenes Kation, vorzugsweise Alkali, wie Na, K, oder eine Tetraalkylammoniumgruppe, wie N(Butyl)₄.

Vorzugsweise enthalten die Aryl- und Heteroarylgruppen der Gruppe A null, einen oder zwei Substituenten. Die einzelnen Sechsringe des Spirobifluorens weisen vorzugsweise null oder einen Substituenten auf.

Die Gruppe A besteht vorzugsweise aus 1 bis 6, besonders bevorzugt 2 bis 4, der oben angegebenen Gruppen.

Die erfindungsgemäßen Polymere zeichnen sich insbesondere durch eine hohe Farbreinheit der Emission, gute Filmbildungseigenschaften und eine gute Löslichkeit in mindestens einem organischen Lösungsmittel mit einem Siedepunkt zwischen 30 und 300°C aus.
Polymer bedeutet im Sinne der Erfindung eine Verbindung, deren Elektrolumineszenzspektrum bei Anfügen weiterer Wiederholeinheiten im wesentlichen gleich bleibt.

Bevorzugt sind weiterhin solche Polymere, bei denen die Gruppe A der allgemeinen Formel (I) folgende Molekülbausteine enthält: 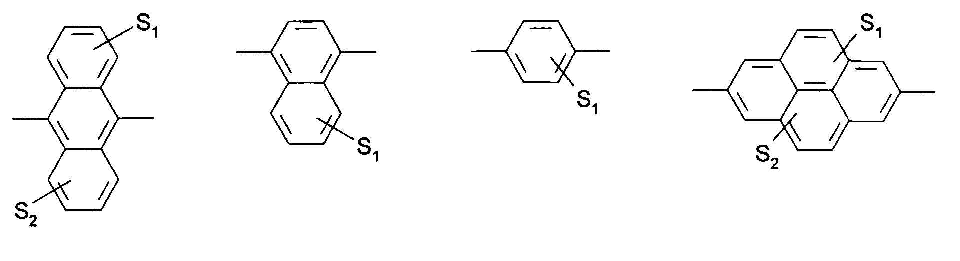 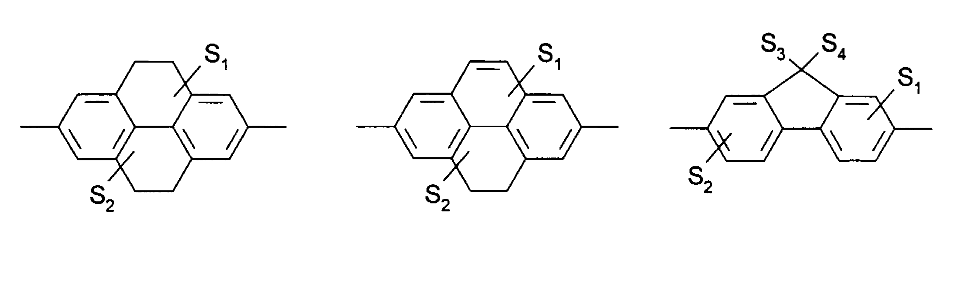 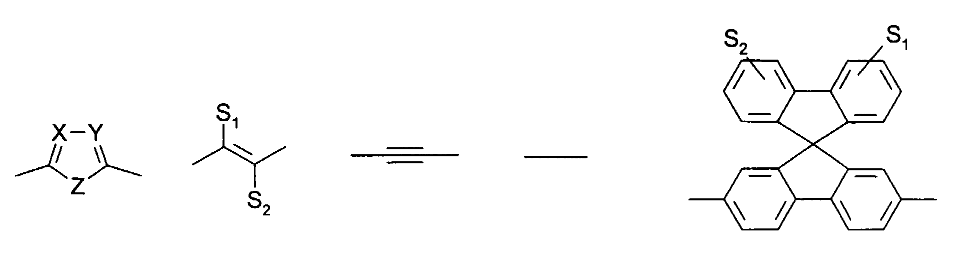 wobei
S₁, S₂, S₃ und S₄ gleich oder verschieden H oder die oben beschriebenen bevorzugten Substituenten sind;
X, Y sind gleich oder verschieden CS₁, N;
Z ist gleich oder verschieden -O-, -S-, -NS₁-, -CS₁S₂-, -CS₁ =CS₁-, -CS₁ =N-, wobei S₁, S₂ H oder die oben beschriebenen bevorzugten Substituenten bedeuten.

Besonders bevorzugt sind Polymere, bei denen die Gruppe A in der allgemeinen Formel (I) folgende Bedeutungen hat: 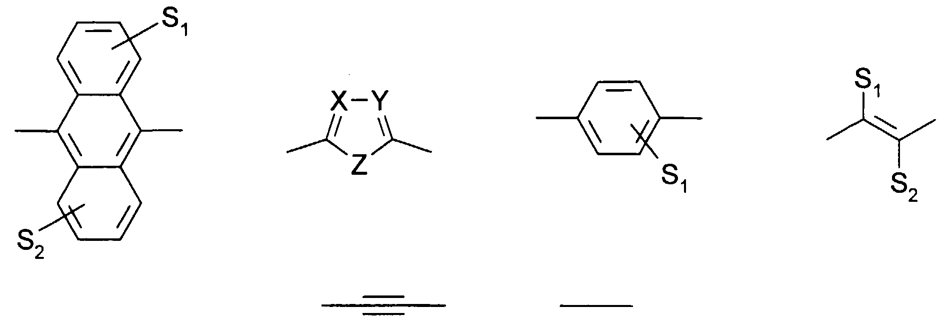
S₁ und S₂ sind wie oben definiert und können auch H bedeuten.
X, Y sind gleich oder verschieden CS₁, N;
Z ist gleich oder verschieden -O-, -S-, -NS₁-, -CS₁S₂-, -CS₁ = CS₁-, -CS₁ = N-.

Ganz besonders bevorzugt sind Polymere, welche folgende Struktur aufweisen: 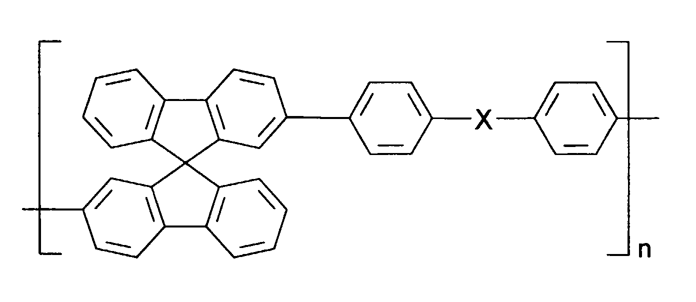 wobei X folgende Bedeutung zukommt: 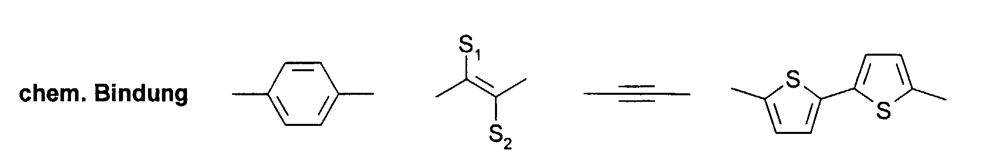 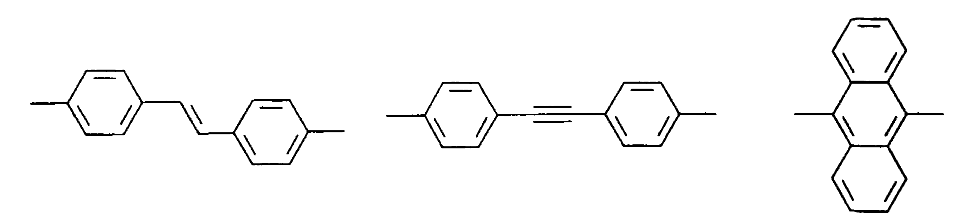 und wobei S₁ und S₂ wie oben definiert sind und auch H bedeuten können; n ist eine natürliche Zahl von 2 bis 1000.

Solche Polymere sind besonders zur Erzielung blauer Elektrolumineszenz gut geeignet.

Die Herstellung der erfindungsgemäßen Polymere kann nach an sich literaturbekannten Methoden, wie sie in Standardwerken zur Organischen Synthese, z.B. Houben-Weyl, Methoden der Organischen Chemie, Georg-Thieme-Verlag, Stuttgart oder J. March, Advanced Organic Chemistry, Fourth Ed., John Wiley & Sons, New York 1992, beschrieben werden, erfolgen.

Die Herstellung erfolgt dabei unter Reaktionsbedingungen, die für die genannten Umsetzungen bekannt und geeignet sind. Dabei kann auch von an sich bekannten, hier nicht näher erwähnten Varianten Gebrauch gemacht werden.

Als Ausgangsverbindungen für die Herstellung der erfindungsgemäßen Polymere kommen im allgemeinen Monomere mit einem 9,9'-Spirobifluoren-Zentrum zum Einsatz, die in 2,2'-Position zur Polyreaktion befähigende Substituenten und gegebenenfalls weitere, diese Reaktion nicht beeinträchtigende Substituenten in beliebigen anderen Positionen.

Methoden zur Synthese dieser Monomere beruhen bevorzugt auf der Synthese des 9,9'-Spirobifluorens, die in den oben genannten Literaturstellen beschrieben wird, und auf weiteren allgemein üblichen und für den Fachmann ohne Probleme durchführbaren Substitutionsreaktionen an diesem Grundkörper.

Weniger bevorzugt, jedoch natürlich auch möglich, ist der Aufbau schon geeignet funktionalisierter Spirobifluorenderivate, ausgehend von geeignet substituierten Vorstufen.

Funktionalisierungen von 9,9'-Spirobifluoren sind beispielsweise beschrieben in J. H. Weisburger, E. K. Weisburger, F. E. Ray, J. *Am. Chem. Soc.* **1959**, 72, 4253; F. K. Sutcliffe, H. M. Shahidi, D. Paterson, J. *Soc. Dyers Colour* **1978,** 94, 306; und G. Haas, V. Prelog, *Helv. Chim. Acta* **1969**, *52*, 1202. Die darin beschriebenen elektrophilen aromatischen Substitutionsreaktionen führen bei geeignet gewählten Bedingungen und Stöchiometrien zur Synthese von 2,2'-bifunktionalisierten Spirobifluorenderivaten (z. B. 2,2'-Dihalogen-9,9'-spirobifluoren, 2,2'-Diacetyl-9,9'-spirobifluoren, 2,2'-Diformyl-9,9'-spirobifluoren, 2,2'-Dinitro-9,9'-spirobifluoren). Diese können dann nach dem Fachmann bekannten Methoden weiter derivatisiert werden (z. B. Halogen zu Cyano (S. 594f.), Nitro zu Amino (S. 1103f.), Acetyl zu Carboxy (S. 1065f.) und weiter zum Carbonsäurechlorid (S. 388f.) (wobei sich die Seitenangaben auf J. March, Advanced Organic Chemistry, Third Ed., John Wiley & Sons, New York beziehen). Durch anschließende Umsetzungen kann dann weiter substituiert werden, vorzugsweise in 7,7'- und 4,4'-Position.

Für die Synthese der Gruppe **A** sei beispielsweise verwiesen auf DE-A 23 44 732, 24 50 088, 24 29 093, 25 02 904, 26 36 684, 27 01 591 und 27 52 975 für Verbindungen mit 1,4-Phenylen-Gruppen; DE-A 26 41 724 für Verbindungen mit Pyrimidin-2,5-diyl-Gruppen; DE-A 40 26 223 und EP-A 0 391 203 für Verbindungen mit Pyridin-2,5-diyl-Gruppen; DE-A 32 31 462 für Verbindungen mit Pyridazin-3,6-diyl-Gruppen; N. Miyaura, T. Yanagi und A. Suzuki, Synthetic Communications **1981**, 11, 513; DE-C 39 30 663; M. J. Sharp, W. Cheng, V. Snieckus, Tetrahedron Letters **1987**, 28, 5093; G. W. Gray, J.Chem.Soc. Perkin Trans II **1989**, 2041 und Mol. Cryst. Liq. Cryst. **1989,** 172, 165; Mol. Cryst. Liq. Cryst. **1991**, 204, 43 und 91; EP-A 0 449 015; WO 89/12039; WO 89/03821; EP-A 0 354 434 für die direkte Verknüpfung von Aromaten und Heteroaromaten.

Die Herstellung disubstituierter Pyridine, disubstituierter Pyrazine, disubstituierter Pyrimidine und disubstituierter Pyridazine findet sich beispielsweise in den entsprechenden Bänden der Serie "The Chemistry of Heterocyclic Compounds" von A. Weissberger und E. C. Taylor (Herausgeber).

Ausgehend von den oben angegebenen Monomeren ist die Polymerisation zu den erfindungsgemäßen Polymeren nach mehreren Methoden möglich.

Beispielsweise können Derivate des 9,9'-Spirobifluorens oxidativ (z.B. mit FeCl₃, siehe u.a. P. Kovacic, N. B. Jones, *Chem. Ber.* **1987,** *87,* 357; M. Weda, T. Abe, H. Awano, *Macromolecules* **1992,** *25,* 5125) oder elektrochemisch (siehe z.B. N. Saito, T. Kanbara, T. Sato, T. Yamamoto, *Polym. Bull.* **1993**, *30*, 285) polymerisiert werden.

Ebenso können die erfindungsgemäßen Polymere aus 2,2'-difunktionalisierten 9,9'-Spirobifluoren-Derivaten hergestellt werden.
Dihalogenaromaten lassen sich unter Kupfer/Triphenylphosphan-Katalyse (siehe z.B. G. W. Ebert, R. D. Rieke, J. *Org. Chem.* **1988***, 53,* 4482) polymerisieren.

Aromatische Diboronsäuren und aromatische Dihalogenide oder gemischte aromatische Halogen-Boronsäuren lassen sich unter Palladiumkatalyse durch Kupplungsreaktionen polymerisieren (siehe z.B. M. Miyaura, T. Yanagi, A. Suzuki, *Synth. Commun.* **1981**, *11,* 513; R. B. Miller, S. Dugar, *Organometallics* **1984**, *3*, 1261).

Aromatische Distannane lassen sich, wie z.B. bei J. K. Stille, *Angew. Chem. Int. Ed. Engl.* **1986,** *25*, 508 angegeben, unter Palladiumkatalyse polymerisieren.

Weiterhin können die oben erwähnten Dihalogenverbindungen in die Dilithio- oder Digrignardverbindungen übergeführt werden, die dann mit weiterer Dihalogenverbindung mittels CuCl₂ (siehe z.B. G. Wittig, G. Klar, *Liebigs Ann. Chem.* **1967,** *704,* 91; H. A. Staab, F. Bunny, *Chem. Ber.* **1967,** *100,* 293; T. Kaufmann, *Angew. Chem.* **1974**, *86,* 321 - 354) oder durch Elektronentransfer ungesättigter 1,4-Dihalogenverbindungen (siehe z.B. S. K. Taylor, S. G. Bennett, K. J. Harz, L. K. Lashley, J. *Org. Chem.* **1981**, *46,* 2190) polymerisiert werden.

Bevorzugt ist die Herstellung von Polymeren mit Wiederholeinheiten der Formel (I) durch Polymerisation von entsprechenden Dihalogenverbindungen unter Ni°-Katalyse. Diese Methode zur Polymerisation ist beispielsweise beschrieben bei M. Kreyenschmidt et al., Macromolecules **1995,** 28, 4577.

Gegenstand der Erfindung ist daher auch ein Verfahren zur Herstellung von teilkonjugierten Polymeren, enthaltend Wiederholeinheiten der Formel (I), 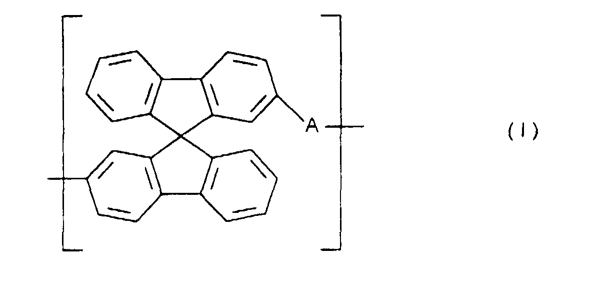 wobei die Symbole die oben angegebenen Bedeutungen haben, welches dadurch gekennzeichnet ist, daß man eine oder mehrere Verbindungen der Formel (II) 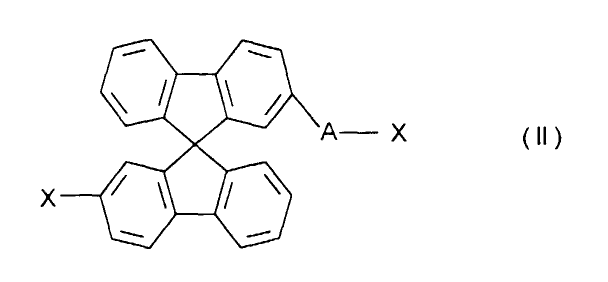 wobei
- X: Cl, Br, list und die übrigen Symbole die gleichen Bedeutungen wie in der Formel (I) haben,
in einem inerten organischen Lösungsmittel in Gegenwart von Ni° bei einer Temperatur von 30 bis 150°C polymerisiert.

Als Katalysatoren eignen sich Ni°-Verbindungen, wie Ni(cod)₂ (cod = 1,5 Cyclooctadien), Ni(PPh₃)₄, oder Nickel(ll)salze in Verbindung mit einem Reduktionsmittel, wie NiCl₂/Zn/PPh₃ oder NiCl₂(PPh₃)₂/Zn.

Der Katalysator wird im allgemeinen in Mengen von 0,1 - 20 mol.-%, bezogen auf die Dihalogenverbindung, eingesetzt, bevorzugt sind 5 bis 15 mol.-%, besonders bevorzugt sind etwa 10 mol.-%.

Als Lösungsmittel eignen sich schwach polare oder polar aprotische organische Lösungsmittel oder Mischungen aus diesen. Bevorzugt sind Ether, wie THF und Diphenylether, aromatische Kohlenwasserstoffe, wie Toluol, Dialkylamide, wie Dimethylformamid und Dimethylacetamid und Mischungen derselben.

Die Reaktion wird im allgemeinen bei Temperaturen von 30 bis 150°C, vorzugsweise 50 bis 120°C durchgeführt. Die Reaktionsdauer beträgt im allgemeinen 1 bis 7 Tage.

Die Aufarbeitung kann nach den üblichen, dem Fachmann bekannten Methoden erfolgen.

Die Synthese der erfindungsgemäßen Polymere kann aber auch durch Polymerisation eines 2,2'-difunktionalisierten 9,9'-Spirobifluorenderivates mit einer weiteren, geeignet difunktionalisierten Verbindung erfolgen.

So kann z.B. 2,2'-Dibrom-9,9'-spirobifluoren mit 4,4'-Biphenylbisboronsäure polymerisiert werden. Auf diese Weise ist gleichzeitig mit dem Polymerisationsschritt der Aufbau verschiedener heterocyclischer Einheiten möglich, wie die Bildung von Oxadiazoleinheiten aus difunktionellen Carbonsäurehalogeniden und difunktionellen Carbonsäurehydraziden, aus der entsprechenden Dicarbonsäure und Hydrazinsulfat (B. Schulz, E. Leibnitz, *Acta Polymer* **1992***, 43,* 343; JP-A 05/178990) oder aus Dicarbonsäurehalogeniden und Bistetrazolen (C. A. Abshire, C. S. Marvel, *Makromol. Chem.* **1961**, 44, 388).

Zur Herstellung von Copolymeren können beispielsweise unterschiedliche Verbindungen mit Strukturelementen der Formel (I) gemeinsam oder auch eine oder mehrere Verbindungen mit Strukturelementen der Formel (I) mit einer oder mehreren weiteren difunktionellen Molekülen ausgewählt aus den Gruppen der Oligovinylene, Oligoacetylene, Oligoarylene, Oligoheteroarylene, Oligoarylenvinylene oder Oligoarylenacetylene polymerisiert werden.

Die Aufarbeitung erfolgt nach bekannten, dem Fachmann geläufigen Methoden, wie sie beispielsweise bei D. Braun, H. Cherdron, W. Kern, Praktikum der makromolekularen organischen Chemie, 3. Aufl. Hüthig Verlag, Heidelberg, 1979, S. 87 ff. oder R. J. Young, P. A. Lovell, Introduction to Polymers, Chapman & Hall, London 1991 beschrieben sind. Beispielsweise kann man die Reaktionsmischung filtrieren, mit wäßriger Säure verdünnen, extrahieren und das nach Trocknen und Abdampfen des Lösungsmittels erhaltene Rohprodukt durch Umfällen weiter reinigen.

Endständige Bromatome können beispielsweise mit LiAlH₄ reduktiv entfernt werden (siehe z.B. J. March, Advanced Organic Chemistry, Third Ed., John Wiley & Sons, S. 510).

Die erfindungsgemäßen Polymere können als Elektrolumineszenzmaterialien Verwendung finden.

Gegenstand der Erfindung ist daher auch die Verwendung von Polymeren, enthaltend Wiederholeinheiten der Formel (I), als Elektrolumineszenzmaterial.

Als Elektrolumineszenzmaterial im Sinne der Erfindung gelten Stoffe, die als aktive Schicht in einer Elektrolumineszenzvorrichtung Verwendung finden können. Aktive Schicht bedeutet, daß die Schicht befähigt ist, bei Anlegen eines elektrischen Feldes Licht abzustrahlen (lichtemittierende Schicht) und/oder daß sie die Injektion und/oder den Transport der positiven und/oder negativen Ladungen verbessert (Ladungsinjektions- oder Ladungstransportschicht).

Gegenstand der Erfindung ist daher auch ein Elektrolumineszenzmaterial, enthaltend ein oder mehrere Polymere, die Wiederholeinheiten der Formel (I) enthalten.

Üblicherweise enthält das erfindungsgemäße Elektrolumineszenzmaterial ein oder mehrere erfindungsgemäße Polymere entweder als Hauptkomponente, d.h. zu größer als 50 Gew.-%, oder als Additiv.

Um als Elektrolumineszenzmaterialien Verwendung zu finden, werden die erfindungsgemäßen Polymere aus Lösungen im allgemeinen nach bekannten, dem Fachmann geläufigen Methoden, wie Gießen (Casting), Eintauchen (Dipping), Drucken (Printing) oder Aufschleudern (Spincoating), in Form eines Films auf ein Substrat aufgebracht. Dieser Prozeß findet in der Regel im Temperaturbereich von -20 bis +300°C, bevorzugt im Bereich von 10 bis 100°C und besonders bevorzugt zwischen 15 und 50°C statt.

Weiterhin Gegenstand der Erfindung ist daher auch ein Verfahren zur Herstellung eines Elektrolumineszenzmaterials, dadurch gekennzeichnet, daß man ein Polymer, enthaltend Wiederholeinheiten der Formel (I), in Form eines Films auf ein Substrat aufbringt.

Gegenstand der Erfindung ist zudem eine Elektrolumineszenzvorrichtung mit einer oder mehreren aktiven Schichten, wobei mindestens eine dieser aktiven Schichten ein oder mehrere erfindungsgemäße Polymere enthält. Die aktive Schicht kann beispielsweise eine lichtemittierende Schicht und/oder eine Transportschicht und/oder eine Ladungsinjektionsschicht sein.

Der allgemeine Aufbau solcher Elektrolumineszenzvorrichtungen ist beispielsweise in US 4,539,507 und US 5,151,629 beschrieben. Polymere enthaltende Elektrolumineszenzvorrichtungen sind beispielsweise in WO 90/13148 oder EP-A 0 443 861 beschrieben.

Sie enthalten üblicherweise eine elektrolumineszierende Schicht zwischen einer Kathode und einer Anode, wobei mindestens eine der Elektroden transparent ist. Zusätzlich können zwischen der elektrolumineszierenden Schicht und der Kathode eine oder mehrere Elektroneninjektions- und/oder Elektronentransportschichten eingebracht sein und/oder zwischen der elektrolumineszierenden Schicht und der Anode eine oder mehrere Lochinjektions- und/oder Lochtransportschichten eingebracht sein. Als Kathode können vorzugsweise Metalle oder metallische Legierungen, z.B. Ca, Mg, Al, In, Mg/Ag dienen. Als Anode können Metalle, z.B. Au, oder andere metallisch leitende Stoffe, wie Oxide, z.B. ITO (Indiumoxid/Zinnoxid) auf einem transparentem Substrat, z.B. aus Glas oder einem transparenten Polymer, dienen.

Im Betrieb wird die Kathode auf negatives Potential gegenüber der Anode gesetzt. Dabei werden Elektronen von der Kathode in die Elektroneninjektionsschicht-/Elektronentransportschicht bzw. direkt in die lichtemittierende Schicht injiziert. Gleichzeitig werden Löcher von der Anode in die Lochinjektionsschicht/ Lochtransportschicht bzw. direkt in die lichtemittierende Schicht injiziert.

Die injizierten Ladungsträger bewegen sich unter dem Einfluß der angelegten Spannung durch die aktiven Schichten aufeinander zu. Dies führt an der Grenzfläche zwischen Ladungstransportschicht und lichtemittierender Schicht bzw. innerhalb der lichtemittierenden Schicht zu Elektronen/Loch-Paaren, die unter Aussendung von Licht rekombinieren.
Die Farbe des emittierten Lichtes kann durch die als lichtemittierende Schicht verwendeten Materialien variiert werden.

Elektrolumineszenzvorrichtungen finden Anwendung z.B. als selbstleuchtende Anzeigeelemente, wie Kontrollampen, alphanumerische Displays, Hinweisschilder, und in optoelektronischen Kopplern.

In der vorliegenden Anmeldungen sind verschiedene Dokumente zitiert, beispielsweise um das technische Umfeld der Erfindung zu illustrieren.

Die Erfindung wird durch die Beispiele näher erläutert, ohne sie dadurch beschränken zu wollen.

### Beispiele

### A Monomersynthesen

### Beispiel 1 Synthese von 2,2'-Dibrom-9,9'-spirobifluoren

3,26 g 9,9'-Spirobifluoren (10,3 mmol), gelöst in 50 ml CH₂CI₂, werden bei Raumtemperatur mit 1,12 ml Brom (21,8 mmol) und einer Spatelspitze SnCl₂ versetzt. Man läßt bis zur Reaktionsbeendigung (ca. 8 Stunden) am Rückfluß sieden. Die nahezu entfärbte Reaktionslösung wird nach Abkühlen mit wäßrigen Lösungen von Na₂SO₃, NaHCO₃ und schließlich reinem Wasser ausgeschüttelt, anschließend auf ca. 20 ml eingeengt. Beim Stehen in der Kälte kristallisiert das Produkt in Form weißer Plättchen aus. Weitere Reinigung ist durch Umkristallisation mit CH₂Cl₂/n-Pentan möglich. Ausbeute: 70-85%.
Schmelzpunkt: 240°C.
¹H-NMR (CDCl₃, ppm): 6.65 (d, J = 7.8 Hz, 2 H, H-8,8'); 6.87 (d, J = 1.9 Hz, 2 H, H-1,1'); 7.15 (dt, J = 7.7, 1.1 Hz., 2 H, H-7,7'); 7.35 (dt, J = 7.6, 1.2 Hz, 2 H, H-6,6'); 7.55 (dd, J = 8.2, 1.9 Hz, 2 H, H-3,3'); 7,75 (d, J = 7.9 Hz, 2 H; H-5,5'); 7.90 (d, J = 7.7, 2 H, H-4,4').

### Beispiel 2 Synthese von 4,4'-Stilbendiboronsäure

Ein Grignardreagenz aus 20,0 g 4,4'-Dibromstilben (59,2 mmol) wird unter Ar in THF einer Lösung von 16,0 g Borsäuretrimethylester (154 mmol) in THF bei -78°C zugetropft. Man läßt die Reaktionsmischung unter Rühren über Nacht auf Raumtemperatur kommen und gießt dann auf ca. 100 g Eis, 5 ml H₂SO₄. Es wird mehrfach mit CHCI₃ ausgeschüttelt, die vereinigten organischen Phasen über Na₂SO₄ getrocknet und eingeengt. Das Rohprodukt kann aus Ethanol/H₂O umkristallisiert werden. Ausbeute: 60-70%.
Der Schmelzpunkt variiert stark in Abhängigkeit vom Wassergehalt.
¹H-NMR (CD₃OD, ppm): 7.12 (s, 2 H, H-vinyl), 7.38 (d, 4 H, H-phenyl), 8.03 (d, 4 H, H-phenyl)

Analog zu der gegebenen Vorschrift lassen sich auch 4,4'-Tolandiboronsäure und 4,4'-Biphenyldiboronsäure herstellen. Letztere ist auch kommerziell erhältlich, z.B. von Lancaster Synthesis GmbH, Mühlheim, Deutschland.

### B Polymerisationen

### Beispiel 3 Polymerisation von 2,2'-Dibrom-9,9'-spirobifluoren mit Ni(0) nach Yamamoto zu Poly-2,2'-(9,9'-spirobifluoren)ylen (Polymer 1)

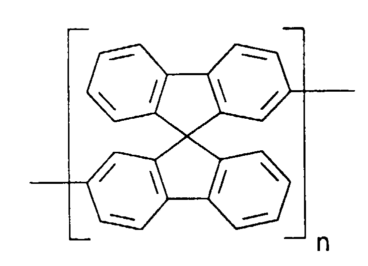

Unter Argon wird eine Lösung von 1,50 g 2,2'-Dibrom-9,9'-spirobifluoren in 300 ml trockenem THF bereitet und auf 60°C erwärmt. Die warme Lösung wird rasch, unter Schutzgas zu einer ebenfalls unter Schutzgas am Rückfluß kochenden Mischung aus 825 mg Ni(cod)₂, 470 mg 2,2'-Bipyridyl und 0,4 ml 1,5-Cyclooctadien (COD) in 50 ml trockenem THF gegeben. Die Polymerisation startet sofort, wobei sich die tiefblaue Reaktionsmischung gelb färbt. Man läßt 6 Stunden am Rückfluß weiterkochen und kühlt anschließend auf Raumtemperatur ab. Die Reaktionslösung wird auf 50 ml eingeengt. Das gelbgefärbte Polymer wird abgesaugt und mit THF, sowie verdünnter Salzsäure und Wasser gewaschen.
Durch Extraktion mit 200 ml 1-Chlornaphthalin wird daraus die lösliche Polymerfraktion gewonnen, die durch Ausschütteln mit Ethylendiamintetraessigsäure (3x mit Ammoniak auf pH 7 bis 8 eingestellte wäßrige Lösung, 1x pH 3) und nachfolgendem Ausschütteln mit verdünnter Salzsäure und Wasser gereinigt wird. Die getrocknete 1-Chlornaphthalinlösung wird im Vakuum auf 50 ml eingeengt und das Polymer durch Eintropfen in 250 ml Methanol ausgefällt. Das erhaltene Polymer ist fast farblos (ca. 0,5 g). ¹H-NMR (C₂D₂Cl₄, 363 K, ppm): 6.60 - 6.90 (4 H , H-1,1',8,8'); 7.00 - 7.10 (2H, H-7,7'); 7.20 - 7.50 (4H, H-3,3',6,6'); 7.60-7.90 (4H, H-4,4',5,5').

### Beispiel 4 Polymerisation von 2,2'-Dibrom-9,9'-spirobifluoren mit 4,4'-Stilbendiboronsäure zu Poly[2,2'-(9,9'-spirobifluorenylen)-4,4'-stilben] (Polymer 2)

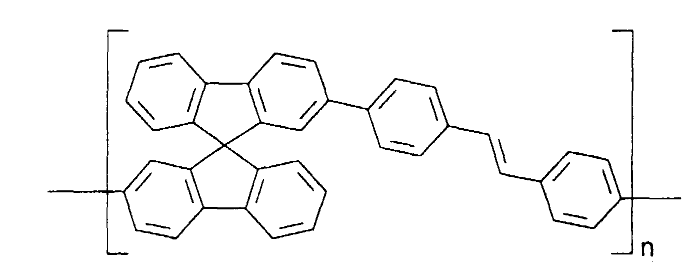

In eine Mischung aus 100 ml THF und 40 ml Ethanol, werden 948 mg (2 mmol) 2,2'-Dibromo-9,9'-spirobifluoren und 536 mg (2 mmol) 4,4'-Stilbendiboronsäure gegeben. Dazu werden 20 ml 1 molare wäßrige Kaliumcarbonatlösung gegeben. Die Mischung wird unter Stickstoff am Rückfluß gekocht und 50 mg Tetrakis(triphenylphosphin)palladium(0), gelöst in 5 ml THF werden zugegeben. Nach 24 Stunden Kochen am Rückfluß wird auf Raumtemperaur abgekühlt. Das gebildete blaßgelbe Polymer wird abgesaugt, mit verdünnter Salzsäure 2 Stunden gekocht und nach erneutem Absaugen mit Wasser säurefrei gewaschen. Durch Extraktion mit heißem 1,1,2,2-Tetrachlorethan wird eine lösliche Polymerfraktion gewonnen (ca. 0,4 - 0,6 g). ¹H-NMR (C₂D₂Cl₄, 363 K, ppm): 6.70 - 6.95 (4 H , H-1,1',8,8'); 7.10 - 7.25 (2H, H-7,7'); 7.25 - 7.50 (14H, H-phenyl, H-vinyl, H-3,3',6,6'); 7.60-8.00 (4H, H-4,4',5,5').

### Beispiel 5 Photolumineszenzmessung an Poly-2,2'-(9,9'-spirobifluoren)ylen (Polymer 1)

Eine Lösung aus Poly-2,2'-(9,9'-spirobifluoren)ylen in Chlorbenzol (2 mg/ml) wird durch Spincoating bei 1000 upm auf einen Quarzträger aufgebracht. Bei Anregung mit Licht einer Wellenlänge von 366 nm zeigt der Polymerfilm blaue Lumineszenz (λₑₘ = 415nm). Ein Vergleich mit dem Fluoreszenzspektrum des Polymers 1 in verdünnter Lösung ( < 10⁻⁵ mol/l in Chlorbenzol) ergibt für den Film eine bathochrome Verschiebung um 10 nm unter Erhalt der spektralen Charakteristik der verdünnten Lösung.

### Beispiel 6 Photolumineszenzmessung an Poly[2,2'-(9,9'-spirobifluorenylen)-4,4'-stilben] (Polymer 2)

Eine Lösung aus Poly[2,2'-(9,9'-spirobifluorenylen)-4,4'-stilben] in Tetrachlorethan (3 mg/ml) wird durch Spincoating bei 1000 upm auf einen Quarzträger aufgebracht. Bei Anregung mit Licht einer Wellenlänge von 366 nm zeigt der Polymerfilm blaue Lumineszenz (λₑₘ = 445 nm). Ein Vergleich mit dem Fluoreszenzspektrum des Polymers 2 in verdünnter Lösung (< 10⁻⁵ mol/l in Tetrachlorethan) ergibt für den Film eine bathochrome Verschiebung um 5 nm unter Erhalt der spektralen Charakteristik der verdünnten Lösung.

### Beispiel 7 Elektrolumineszenz-Vorrichtung

Eine Lösung des zu vermessenden Polymers in Chlorbenzol oder Tetrachlorethan (Konzentration: 3 mg/ml) wird unter Stickstoff durch Spincoating bei 1000 upm auf einen mit ITO (Indium-Zinn-Oxid) beschichteten Glasträger (strukturiert, Streifen 2 mm breit) aufgebracht. Der Glasträger wird über eine Schleuse unter Beibehaltung der Schutzgasatmosphäre in eine Hochvakuum-Bedampfungsanlage überführt. Bei 2x10⁻⁵ mbar werden quer zu den ITO-Streifen unter Verwendung einer Maske Ca-Streifen (oder andere Metalle oder Legierungen mit geeigneten Austrittsarbeiten) (2 mm breit, 230 nm dick) auf die Polymerschicht aufgedampft. Die so erhaltene Vorrichtung, ITO/Polymer/Metall, wird in einen Probenhalter gegeben und die Elektroden über Federkontakte mit einer Stromquelle verbunden, wobei ein ITO-Streifen positiv und ein Ca-Streifen negativ gepolt werden. Beim Anlegen einer genügend hohen Spannung, wird an dem entsprechenden Matrixelement eine Elektrolumineszenz beobachtet.

## Patentansprüche

1. Teilkonjugiertes Polymer, enthaltend Wiederholeinheiten der Formel (I), 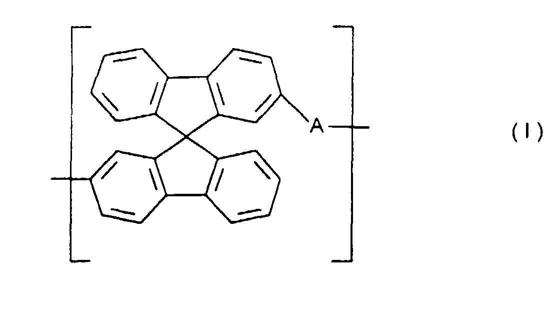 worin die Symbole folgende Bedeutungen haben:
**A** ist gleich oder verschieden jeweils null bis acht gleiche oder verschiedene Arylen- und/oder Heteroarylen- und/oder Vinylen- und/oder Acetylengruppen, die, wie auch das Spirobifluorengerüst, gegebenenfalls substituiert sein können.

2. Polymer nach Anspruch 1, dadurch gekennzeichnet, daß die Gruppe **A** in der allgemeinen Formel (I) folgende Bedeutung hat: 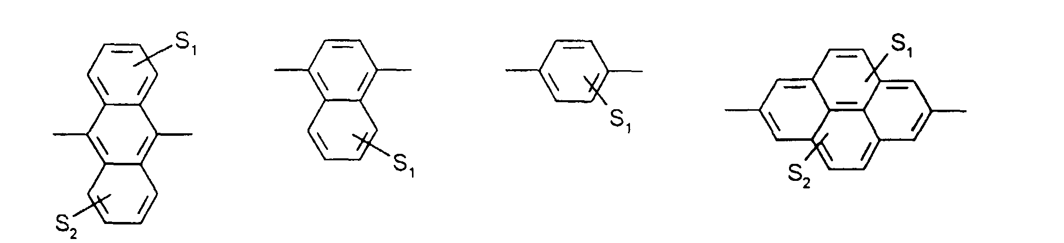 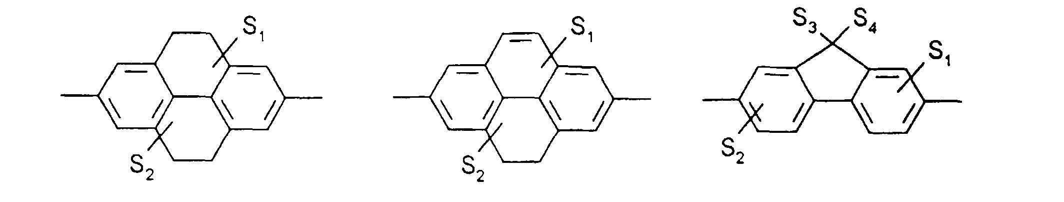 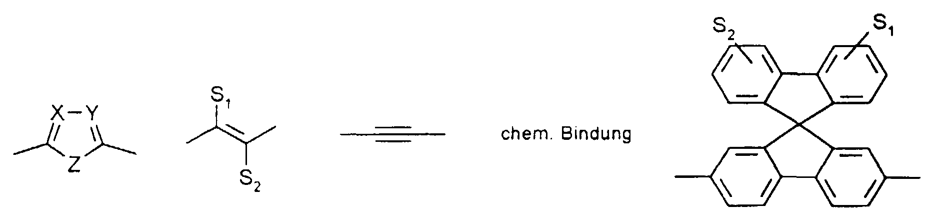 wobei die Symbole folgende Bedeutungen haben:
X, Y sind gleich oder verschieden CS₁, N;
Z ist gleich oder verschieden -O-, -S-, -N S₁-, -CS₁S₂-, -CS₁ =CS₁-, -CS₁ =N-;
S₁, S₂, S₃ und S₄ sind gleich oder verschieden H oder eine geradkettige, cyclische oder verzweigte Alkyl-, Alkoxy- oder Estergruppe mit 1 bis 22 C-Atomen, Aryl- und/oder Aryloxygruppen, mit 2 bis 20 C-Atomen, wobei der Aromat mit C₁-C₂₂-Alkyl, C₁-C₂₂-Alkoxy, Br, Cl, F, CN, CO₂R, SO₃R und/oder P(O)(OR)₂ substituiert sein kann, Br, Cl, F, CN, CO₂R, SO₃R, P(O)(OR)₂ und CF₃; R ist H oder eine geradkettige oder verzweigte Alkylgruppe mit 1 bis 22 C-Atomen oder ein einfach geladenes Kation.

3. Polymer nach Anspruch 1 und/oder 2, dadurch gekennzeichnet, daß die Gruppe A in der allgemeinen Formel (I) folgende Bedeutung hat: 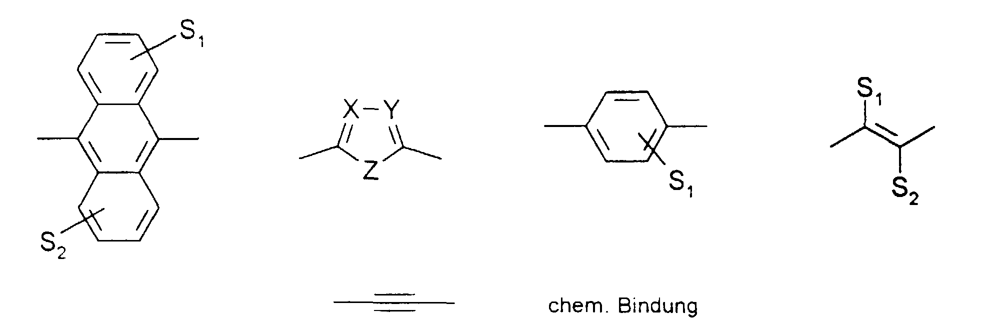 wobei die Symbole folgende Bedeutungen haben:
X, Y sind gleich oder verschieden CS₁, N;
Z ist gleich oder verschieden -O-, -S-, -NS¹-, -CS¹S²-, -CS¹ CS¹-, -CS¹ =N- .
S₁ und S₂ sind gleich oder verschieden H oder eine geradkettige, cyclische oder verzweigte Alkyl-, Alkoxy- oder Estergruppe mit 1 bis 22 C-Atomen, Aryl- und/oder Aryloxygruppen, mit 2 bis 20 C-Atomen, wobei der Aromat mit C₁-C₂₂-Alkyl, C₁-C₂₂-Alkoxy, Br, Cl, F, CN, CO₂R, SO₃R und/oder P(O)(OR)₂ substituiert sein kann, Br, Cl, F, CN, CO₂R, SO₃R, P(O)(OR)₂ und CF₃; R ist H oder eine geradkettige oder verzweigte Alkylgruppe mit 1 bis 22 C-Atomen oder ein einfach geladenes Kation.

4. Polymer nach einem oder mehreren der vorhergehenden Ansprüche, gekennzeichnet durch die folgende Struktur, 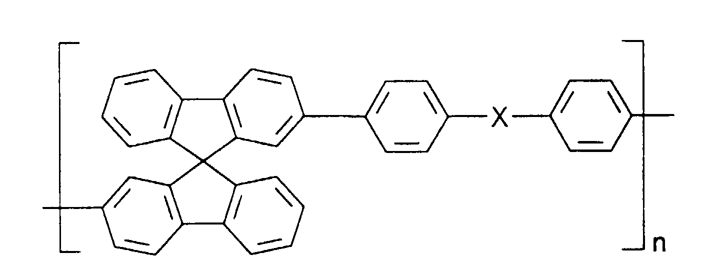 wobei die Symbole folgende Bedeutungen haben:
X ist 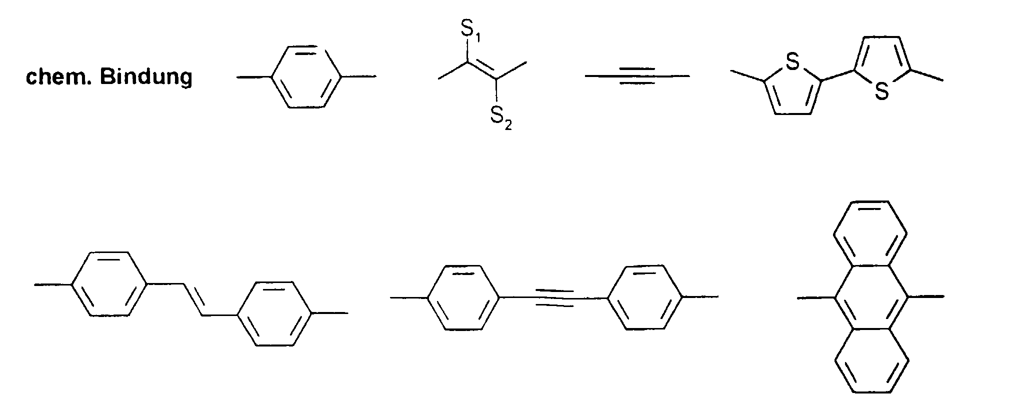
S₁ und S₂ sind gleich oder verschieden H oder eine geradkettige, cyclische oder verzweigte Alkyl-, Alkoxy- oder Estergruppe mit 1 bis 22 C-Atomen, Aryl- und/oder Aryloxygruppen, mit 2 bis 20 C-Atomen, wobei der Aromat mit C₁-C₂₂-Alkyl, C₁-C₂₂-Alkoxy, Br, Cl, F, CN, CO₂R, SO₃R und/oder P(O)(OR)₂ substituiert sein kann, Br, Cl, F, CN, CO₂R, SO₃R, P(O)(OR)₂ und CF₃; R ist H oder eine geradkettige oder verzweigte Alkylgruppe mit 1 bis 22 C-Atomen oder ein einfach geladenes Kation;
n ist eine natürliche Zahl von 2 bis 1000.

5. Polymer nach einem oder mehreren der vorhergehenden Ansprüche, dadurch gekennzeichnet, daß es ein Copolymer ist.

6. Verfahren zur Herstellung eines Polymers nach einem oder mehreren der Ansprüche 1 bis 5, dadurch gekennzeichnet, daß man eine oder mehrere Verbindungen der Formel (II), 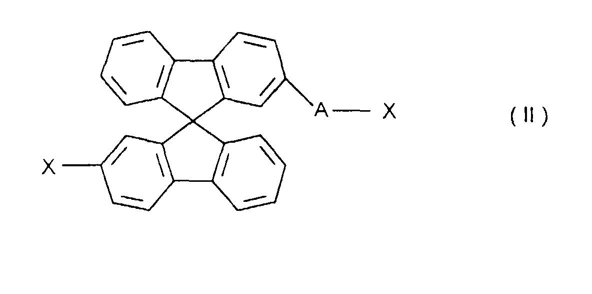 wobei X Cl, Br, I ist und die übrigen Symbole die in der Formel (I) in den Ansprüchen 1 bis 5 angegebenen Bedeutungen haben,
in einem inerten organischen Lösungsmittel in Gegenwart von Ni° bei einer Temperatur von 30 bis 150°C polymerisiert.

7. Verwendung eines Polymers nach einem oder mehreren der Ansprüche 1 bis 5 als Elektrolumineszenzmaterial.

8. Elektrolumineszenzmaterial, enthaltend ein Polymer nach einem oder mehreren der Ansprüche 1 bis 5.

9. Verfahren zur Herstellung eines Elektrolumineszenzmaterials, dadurch gekennzeichnet, daß ein Polymer nach einem oder mehreren der Ansprüche 1 bis 5 in Form eines Films auf ein Substrat aufgebracht wird.

10. Elektrolumineszenzvorrichtung mit einer oder mehreren aktiven Schichten, dadurch gekennzeichnet, daß mindestens eine dieser aktiven Schichten ein Polymer gemäß einem oder mehreren der Ansprüche 1 bis 5 als Elektrolumineszenzmaterial enthält.

## Claims

1. A partially conjugated polymer comprising repeating units of the formula (I), 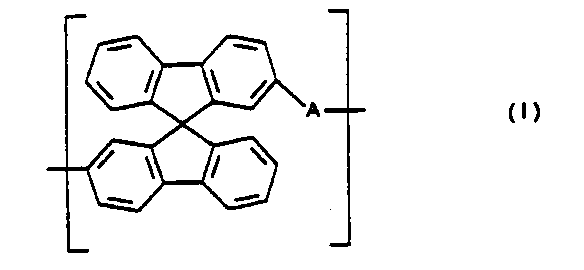 where the symbols have the following meanings:
A are identical or different and are each from zero to eight identical or different arylene and/or heteroarylene and/or vinylene and/or acetylene groups which, like the spirobifluorene framework, may be substituted or unsubstituted.

2. A polymer as claimed in claim 1, wherein the group A in the formula (I) is: 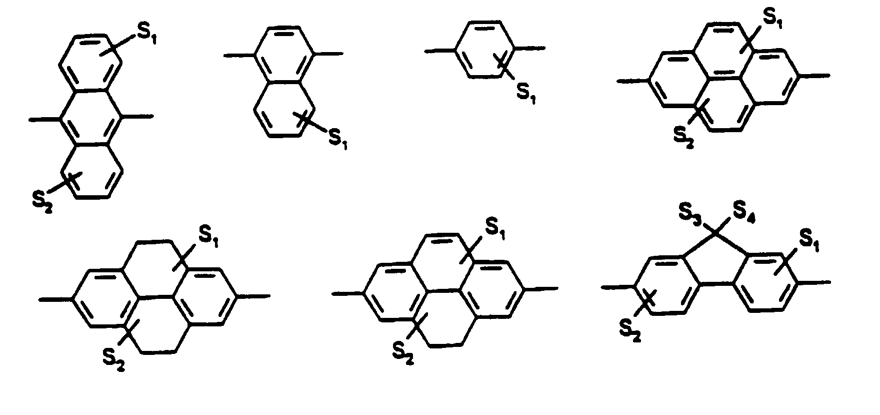 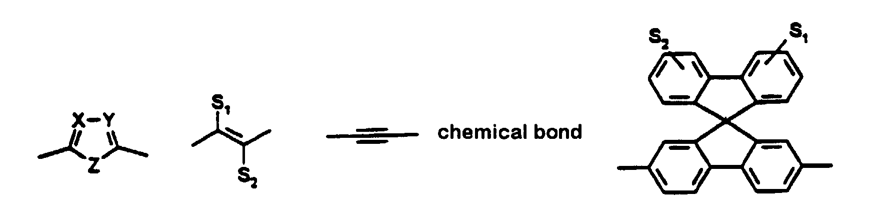 where the symbols have the following meanings:
X, Y are identical or different and are CS₁, N;
Z are identical or different and are -O-, -S-, -NS₁-, -CS₁S₂-, -CS₁ = CS₁-, -CS₁ = N-;
S₁, S₂, S₃ and S₄ are identical or different and are H or straight-chain, cyclic or branched alkyl, alkoxy or ester groups having from 1 to 22 carbon atoms, aryl and/or aryloxy groups having from 2 to 20 carbon atoms, where the aromatic may bear C₁-C₂₂-alkyl, C₁-C₂₂-alkoxy, Br, Cl, F, CN, CO₂R, SO₃R and/or P(O)(OR)₂ as substituents, Br, Cl, F, CN, CO₂R, SO₃R, P(O)(OR)₂ and CF₃; R is H or a straight-chain or branched alkyl group having from 1 to 22 carbon atoms or a singly charged cation.

3. A polymer as claimed in claim 1 and/or 2, wherein the group A in the formula (I) is: 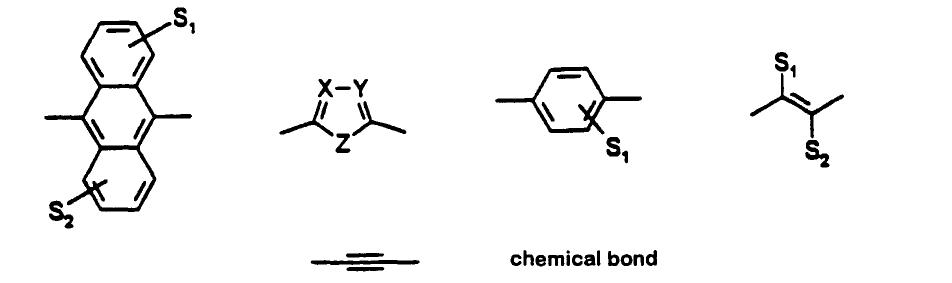 where the symbols have the following meanings:
X, Y are identical or different and are CS₁, N;
Z are identical or different and are -O-, -S-, -NS₁-, -CS₁S₂-, -CS₁ = CS₁-, -CS₁ = N-;
S₁ and S2 are identical or different and are H or straight-chain, cyclic or branched alkyl, alkoxy or ester groups having from 1 to 22 carbon atoms, aryl and/or aryloxy groups having from 2 to 20 carbon atoms, where the aromatic may bear C₁-C₂₂-alkyl, C₁-C₂₂-alkoxy, Br, Cl, F, CN, CO₂R, SO₃R and/or P(O)(OR)₂ as substituents, Br, Cl, F, CN, CO₂R, SO₃R, P(O)(OR)₂ and CF₃; R is H or a straight-chain or branched alkyl group having from 1 to 22 carbon atoms or a singly charged cation.

4. A polymer as claimed in one or more of the preceding claims which has the following structure, 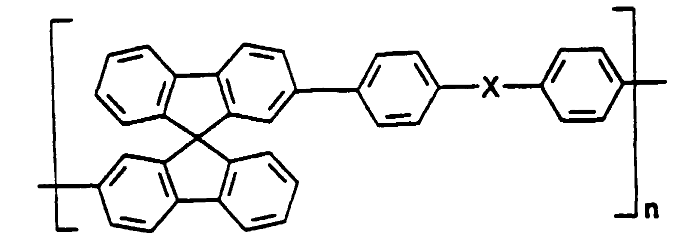 where the symbols have the following meanings:
X is 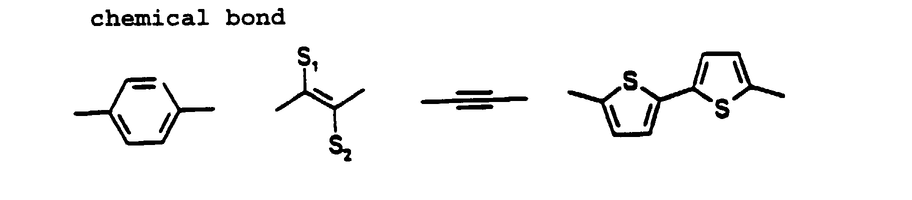 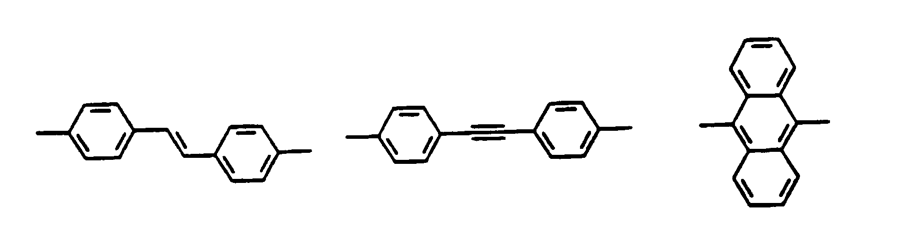
S₁ and S₂ are identical or different and are H or straight-chain, cyclic or branched alkyl, alkoxy or ester groups having from 1 to 22 carbon atoms, aryl and/or aryloxy groups having from 2 to 20 carbon atoms, where the aromatic may bear C₁-C₂₂-alkyl, C₁-C₂₂-alkoxy, Br, Cl, F, CN, CO₂R, SO₃R and/or P(O)(OR)₂ as substituents, Br, Cl, F, CN, CO₂R, SO₃R, P(O)(OR)₂ and CF₃; R is H or a straight-chain or branched alkyl group having from 1 to 22 carbon atoms or a singly charged cation;
n is a natural number from 2 to 1000.

5. A polymer as claimed in one or more of the preceding claims which is a copolymer.

6. A process for preparing a polymer as claimed in one or more of claims 1 to 5, which comprises polymerizing one or more compounds of the formula (II), 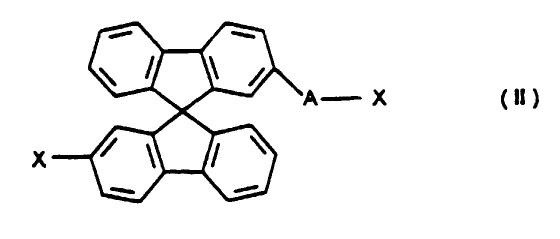 where X is Cl, Br, I and the other symbols have the meanings given in claims 1 to 5 for the formula (I),
in an inert organic solvent in the presence of Ni⁰ at a temperature of from 30 to 150°C.

7. The use of a polymer as claimed in one or more of claims 1 to 5 as electroluminescence material.

8. An electroluminescence material comprising a polymer as claimed in one or more of claims 1 to 5.

9. A process for producing an electroluminescence material, which comprises applying a polymer as claimed in one or more of claims 1 to 5 in the form of a film to a substrate.

10. An electroluminescence device comprising one or more active layers, wherein at least one of these active layers comprises a polymer as claimed in one or more of claims 1 to 5 as electroluminescence material.

## Revendications

1. Polymère partiellement conjugué, contenant des unités répétitives de formule (I), 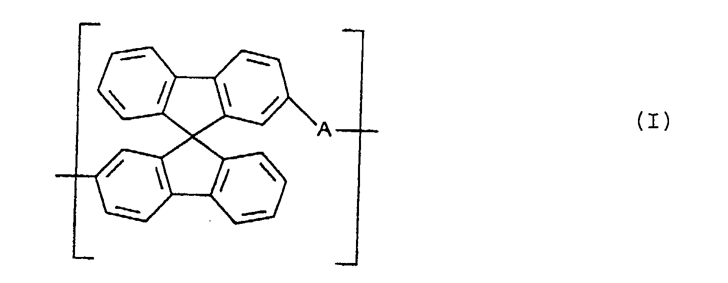 où les symboles possèdent les significations suivantes :
A représente à chaque fois 0 à 8 groupes, identiques ou différents, arylène et/ou hétéroarylène et/ou vinylène et/ou acétylène, lesquels, ainsi que le squelette spirobifluorène, peuvent éventuellement être substitués.

2. Polymère selon la revendication 1, caractérisé en ce que le groupe A de formule générale (I) possède la signification suivante : 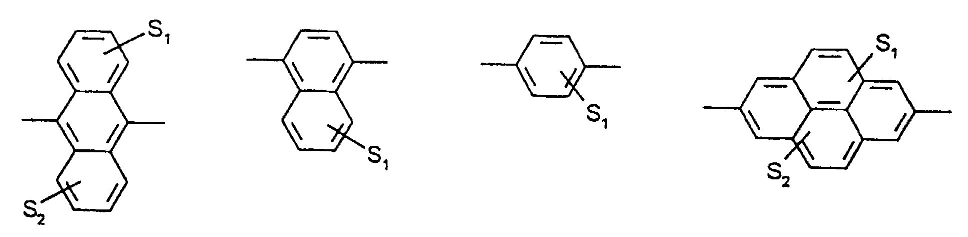 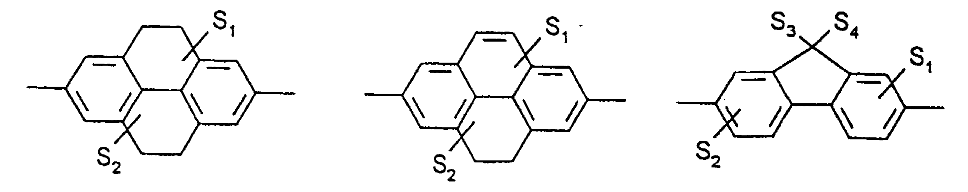 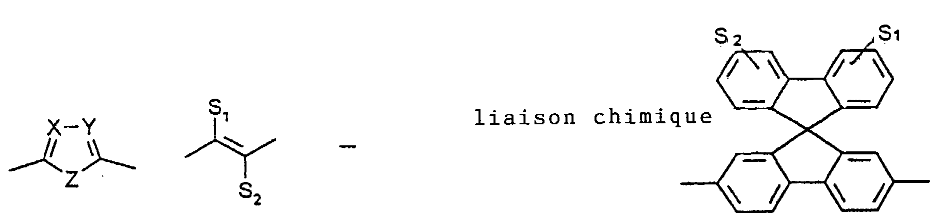 les symboles possèdant les significations suivantes :
X, Y sont identiques ou différents et représentent les groupes CS₁, N ;
Z représente les groupes, identiques ou différents, -O-, -S-, -NS₁-, -CS₁S₂-, -CS₁=CS₁-, -CS₁=N- ;
S₁, S₂, S₃ et S₄ représentent, identiques ou différents, H ou un groupe alkyle, alkoxy ou ester à chaîne droite, cyclique ou ramifiée présentant de 1 à 22 atomes de carbone, des groupes aryle et/ou aryloxy présentant de 2 à 20 atomes de carbone, le composé aromatiques pouvant être substitué par des substituants des substituants alkyle en C₁-C₂₂, alkoxy en C₁-C₂₂, Br, Cl, F, CN, CO₂R, SO₃R et/ou P(O)(OR)₂, Br, Cl, F, CN, CO₂R, SO₃R, P(O)(OR)₂ et CF₃ ; R représente H ou un groupe alkyle à chaîne droite ou ramifiée présentant de 1 à 22 atomes de carbone ou un cation à charge simple.

3. Polymère selon la revendication 1 et/ou 2, caractérisé en ce que le groupe A dans la formule générale (I) possède la signification suivante : 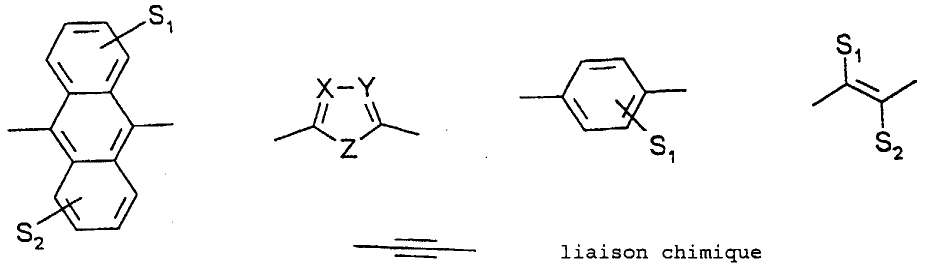 les symboles possédant les significations suivantes :
X, Y sont identiques ou différents et représentent les groupes CS₁, N ;
Z représente les groupes, identiques ou différents, -O-, -S-, -NS₁-, -CS₁S₂-, -CS₁=CS₁-, -CS₁=N-,
S₁ et S₂ sont identiques ou différents et représentent H ou un groupe alkyle, alkoxy ou ester à chaîne droite, cyclique ou ramifiée présentant de 1 à 22 atomes de carbone, des groupes aryle et/ou aryloxy présentant de 2 à 20 atomes de carbone, le groupe aromatique pouvant être substitué par des substituants alkyle en C₁-C₂₂, alkoxy en C₁-C₂₂, Br, Cl, F, CN, CO₂R, SO₃R et/ou P(O)(OR)₂, Br, Cl, F, CN, CO₂R, SO₃R, P(O)(OR)₂ et CF₃ ; R représente H ou un groupe alkyle à chaîne droite ou ramifiée présentant de 1 à 22 atomes de carbone ou un cation à charge simple.

4. Polymère selon une ou plusieurs des revendications précédentes, caractérisé par la structure suivante 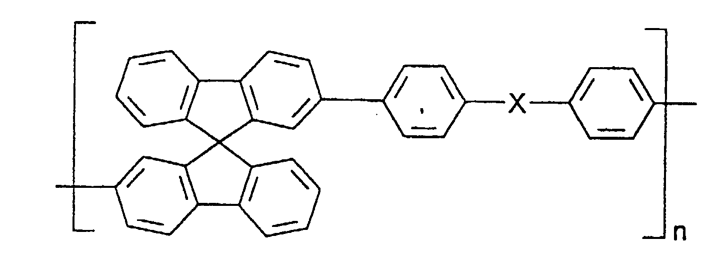 les symboles ayant les significations suivantes :
X représente 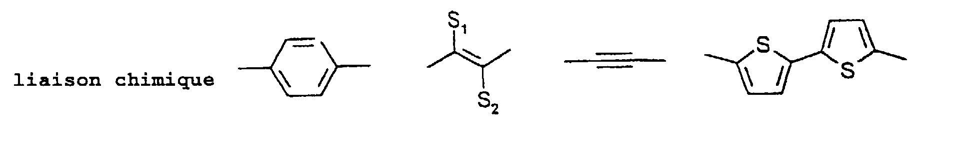 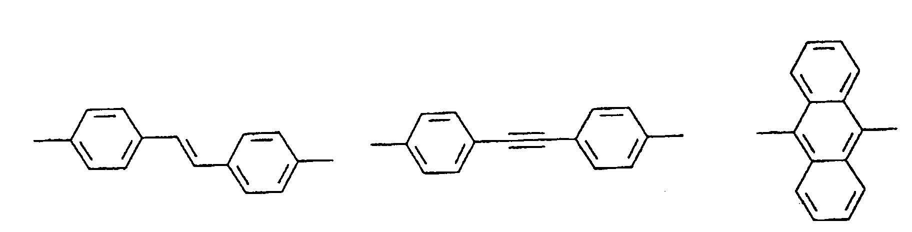
S₁ et S₂ sont identiques ou différents et représentent H ou un groupe alkyle, alkoxy ou ester à chaîne droite, cyclique ou ramifiée présentant de 1 à 22 atomes de carbone, des groupes aryle et/ou aryloxy présentant de 2 à 20 atomes de carbone, le groupe aromatique pouvant être substitué par des substituants alkyle en C₁-C₂₂, alkoxy en C₁-C₂₂, Br, Cl, F, CN, CO₂R, SO₃R et/ou P(O)(OR)₂, Br, Cl, F, CN, CO₂R, SO₃R, P(O) (OR)₂ et CF₃ ; R représente H ou un groupe alkyle à chaîne droite ou ramifiée présentant de 1 à 22 atomes de carbone ou un cation à charge simple ;
n est un nombre naturel de 2 à 1000.

5. Polymère selon une ou plusieurs des revendications précédentes, caractérisé en ce qu'il est un copolymère.

6. Procédé de préparation d'un polymère selon une ou plusieurs des revendications 1 à 5, caractérisé en ce qu'on polymérise un ou plusieurs composé de formule (II) 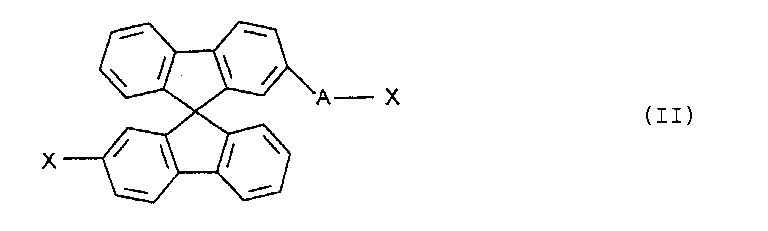 X représentant Cl, Br, I et les autres symboles à la formule (I) possédant les significations données aux revendications 1 à 5,
dans un solvant organique inerte en présence de Ni⁰ à une température de 30 à 150°C.

7. Utilisation d'un polymère selon une ou plusieurs des revendications 1 à 5 en tant que matière électroluminescente.

8. Matière électroluminescente contenant un polymère selon une ou plusieurs des revendications 1 à 5.

9. Procédé de préparation d'une matière électroluminescente caractérisé en ce qu'on applique un polymère selon une ou plusieurs des revendications 1 à 5 sous forme d'un film sur un substrat.

10. Dispositif à électroluminescence ayant une ou plusieurs couches actives, caractérisé en ce que au moins une ou plusieurs de ces couches actives contiennent un polymère selon une ou plusieurs des revendications 1 à 5 en tant que matière électroluminescente.
